# EUROPEAN PATENT APPLICATION

(11) **EP 3 905 431 A1**
(43) Date of publication of application: **03.11.2021**
(21) Application number: 19903223.6
(22) Date of filing: 29.11.2019
(51) Int. Cl.: H01Q 1/28, H01Q 3/02

(54) **INFLATION ANTENNA**

(30) Priority: 29.12.2018 CN 201811652590; 17.01.2019 CN 201910042936
(71) Applicant: Spacety Co., Ltd (Changsha), Changsha, Hunan 410205 (CN)
(72) Inventor: DU, Zhigui, Changsha, Hunan 410205 (CN); YANG, Feng, Changsha, Hunan 410205 (CN); REN, Weijia, Changsha, Hunan 410205 (CN); XIANG, Xiaoxia, Changsha, Hunan 410205 (CN)
(74) Representative: Schäfer, Matthias W.
(86) International application number: PCT/CN2019/121954
(87) International publication number: WO 2020/134857

(57) **Abstract**

The present invention relates to a volume-controllable inflatable antenna, at least comprising satellite thrusters, at least one acquisition module, and at least one adjustment module, and the first adjustment module is configured to: determine the first antenna adjustment control information based on the orbital transfer environment monitoring information; determine the estimated consumption for the satellite thruster to execute the specific event; and based on the first antenna adjustment control information and the estimated consumption determining orbital transfer request mixing ratio coefficients corresponding to the satellite thruster and the inflatable antenna, respectively as well as a first control instruction and a second control instruction corresponding thereto, so that the inflatable antenna receives the first control instruction in a manner that an aerodynamic force compensation is made to the satellite thruster that receives the second control instruction, and based on second aerodynamic force information that is acquired at a second moment and is related to areas involved in the ignition and transfer position performing at least one time of adjustment and correction, thereby executing the at least one relevant specific event.

## Description

### BACKGROUND OF THE INVENTION

### 1. Technical Field

The present invention relates to the field of aerospace technology, and more particularly to an inflatable antenna, which is a volume-controllable, inflatable antenna, and a spatially deployable inflatable antenna.

### 2. Description of Related Art

Low-orbit satellites have relatively low operation altitudes and thus take less time to travel before they can be deployed and put into operation. Besides, low-orbit satellites have relatively short orbital periods, and therefore have smaller intervals between two visits over the same sites, leading to higher frequencies of detection and in turn more collected information as compared to those with traditional satellites. However, with their relatively low orbital altitudes, orbit satellites receive ten more orders of magnitude of aerodynamic force than traditional satellites do. The atmosphere itself has non-ignorable influence on operation of spacecraft, and can cause acceleration or deceleration of spacecraft over time, making velocity compensation a frequent need to low-orbit satellites. It is not exceptional that large inflatable structures that are not well controlled undergo accidental inflation during their space travel. This can lead to structural entanglements and even damages to spacecraft hardware. It is thus desirable to deploy an inflatable antenna in a well-controlled manner in terms of both time and space. A known deployment control mechanism implements a valve-based staged control technique. In particular, a long inflating tube is divided into several sections each equipped with a pressure-regulating valve at the upstream end. When receiving inflating gas, the tube sections are expanded successively in a controlled manner. Another known deployment control mechanism employs several long helical springs installed on the inner wall of an inflating tube, and controls expansion of the tube by reaching balance between the inflation pressure and the restoring force of the spring. Yet another known deployment control mechanism uses a long tape lengthwise adhered to a tube from outside. When the tube is filled with air and expanded, the tape generates a certain drag to control the expansion. There are many different structures in the prior art to control the expanded paraboloid in terms of area, and volume using controlled inflation. Some examples are given below.

China Patent Publication No. CN107978837A discloses an inflatable flexible antenna and its deployment method, wherein an antenna module is folded inside a container prior to its deployment. After launch, when the antenna system receives a deployment instruction, the container opens and releases the antenna module. The antenna module is unfolded as a filling material works and forms a spherical antenna structure. The existing inflatable flexible antenna is designed to reduce the overall volume and mass of the antenna system for facilitating its launch. However, the prior-art inflatable flexible antenna and its deployment method are less reliable because the deployment process solely relies on mechanical expansion and the driving mechanism is complicated. Meanwhile, since gas filling is highly dependent on solar irradiation angles and thus is less controllable in terms of gas amount and filling rate, the resulting deployment is subject to numerous uncontrollable factors. The uncontrollable deployment and the high impact load during launch of the satellite can both bring about significant shock and vibration to the overall structure. As a result, while the structure is compact when folded, it is less resistant to interference and fails to ensure stable, well controlled deployment.

As to operation of spacecraft in the space, in addition to orbital transfer, orbit keeping is also an issue to be addressed for satellites. Generally, a synchronous satellite accomplishes momentum stability in virtue of self-rotation or a momentum wheel that keeps the axis of spin perpendicular to equatorial plane and calibrates the visual axis of global beam to keep it perpendicular to the axis of spin. In such an ideal state, the visual axis of global beam always points to the nadir point area when the satellite rotates with the earth. May factors can cause orbital drift, which makes the satellite orbit inclined to the nominal equatorial plane. Such an orbital incline can grow over time, leading to rolling and pointing errors of yaw. Specifically, solar and lunar attraction to the satellite and variation of gravitational field of the earth generated by the non-spherical figure of the earth can bring about orbital perturbation, making the orbital plane of the satellite angled to the ideal equatorial plane. The net effect of these orbital disturbances is inclination of the satellite orbit, exhibited as slow draft of 0.75° to 0.95° per year. For addressing the issues of low-orbit satellites such as low orbital altitude, high sensitivity to aerodynamic drag, and fast orbital decay, the common solution is about reducing the windward surface of satellites. However, most of the existing orbital transfer methods with aerodynamic aid are focused on entering-exiting the atmospheric layer with the orbital velocity, and there is little attention put to orbit keeping during in-orbit operation using the aerodynamic force.

China Patent Publication No. CN104536452B provides an optimization method of relative orbit transfer path of spacecraft based on time-fuel optimum control, and relates to the optimization method of the relative orbit transfer path of the spacecraft. The optimization method of the relative orbit transfer path of the spacecraft is used for solving the problem that the finite thrust amplitude is not considered in the existing method and the problem that only time optimum or only the fuel consumption is considered in the existing method when a tracking spacecraft is in a relative orbit coordinate system. The optimization method comprises the following steps: firstly, establishing a kinematics and dynamics model as shown in the specification of the relative orbit, and designing control quantities ux, uy and uz applied along three axes respectively; secondly, decoupling the kinematics and dynamics model of the relative orbit into three subsystems; after decoupling into three subsystems, transforming the total performance index as shown in the specification considering transfer time and fuel consumption of the tracking spacecraft into mono-axial performance index as shown in the specification of each axis, and finally obtaining the time-fuel optimal control law as shown in the specification for controlling the tracking spacecraft. The optimization method is suitable for optimizing the relative orbit transfer path of the spacecraft. In the prior-art optimization method of relative orbit transfer path of spacecraft based on time-fuel optimum control, the time-fuel optimal control law is obtained and used for tracking and controlling spacecraft. As compared to some approaches where only time consumption or fuel consumption is considered, the known method takes both transfer time and fuel consumption into consideration, and allows time-fuel optimum control to be reached by carefully balancing the two. However, the known optimization method of orbit transfer uses the aerodynamic force as the only aid, and has poor utilization of the aerodynamic force. Consequently, the known control method for tracking spacecraft based on the time-fuel optimal control law still fails to solve the problems about insignificant fuel saving and long transfer time.

### SUMMARY OF THE INVENTION

To address the shortcomings of the prior art, the present invention provides a volume-controllable inflatable antenna, at least comprising satellite thrusters, at least one acquisition module, and at least one adjustment module, wherein, the first adjustment module for adjusting the positional attitude of the inflatable antenna is configured to:
determine at least one ignition and transfer position based on the initial orbit and the target orbit acquired by the first acquisition module, and generate the orbital transfer environment monitoring information based on first aerodynamic force information relates to the areas involved in the ignition and transfer position as acquired by the second acquisition module at a first moment, and determine the first antenna adjustment control information based on the orbital transfer environment monitoring information;
determine at least one instruction for executing a relevant said specific event based on the initial orbit and the target orbit, and determine the estimated consumption for the satellite thruster to execute the specific event when receiving the instruction for executing the relevant specific event; and
based on the first antenna adjustment control information and the estimated consumption determining orbital transfer request mixing ratio coefficients corresponding to the satellite thruster and the inflatable antenna, respectively as well as a first control instruction and a second control instruction corresponding thereto, so that the inflatable antenna receives the first control instruction in a manner that an aerodynamic force compensation is made to the satellite thruster that receives the second control instruction, and based on second aerodynamic force information that is acquired at a second moment and is related to areas involved in the ignition and transfer position performing at least one time of adjustment and correction, thereby executing the at least one relevant specific event.

Advantageously, the first antenna adjustment control information determined by the first adjustment module based on the orbital transfer environment monitoring information at least comprises first orientation adjustment duration for antenna orientation adjustment and first deployment adjustment duration for antenna specific surface area adjustment, and first movement duration is determined based on the one having the greater value between the first orientation adjustment duration and the first deployment adjustment duration, in which, when the first movement duration does not exceed a preset duration threshold, the first adjustment module uses the ignition and transfer position and the initial orbit to determine an antenna initial adjustment position corresponding to the first movement duration, and thereby is able to use the antenna initial adjustment position to determine a position of the antenna in the initial orbit when the adjustment was begun.

Advantageously, the first adjustment module is configured to execute the following steps:
S1: when the first movement duration exceeds the preset duration threshold, determining at least one preset proportional allocation that is used to establish dynamic correlational relationship between the first orientation adjustment duration and the first deployment adjustment duration;
S2: updating the preset proportional allocation in a manner that the first deployment adjustment duration is gradually decreased and the first orientation adjustment duration is gradually increased, so as to determine a second orientation adjustment duration that is corresponding to the preset proportional allocation and is used to update the first orientation adjustment duration and a second deployment adjustment duration that is corresponding to the preset proportional allocation and is used to update the first deployment adjustment duration;
S3: determining a second movement duration that is used to update the first movement duration based on the one having the greater value between the updated first orientation adjustment duration and the updated first deployment adjustment duration, and comparing the updated first movement duration with the preset duration threshold again; and
S4: repeating the previous steps S1-S3 until the first movement duration does not exceed the preset duration threshold, and outputting the first orientation adjustment duration, the first deployment adjustment duration, and the antenna initial adjustment position that are all corresponding to the first movement duration, so as to realize an optimal solution that has both the minimal possible estimated consumption and maximal possible orbital transfer efficiency.

Advantageously, the second adjustment module at least comprises an environment monitoring unit, which is configured to:
at the first moment when a satellite is in a satellite initial adjustment position acquire current aerodynamic force information that is collected in a real-time manner and is related to areas involved in the satellite initial adjustment position and is used to provide a parameter set required by an atmospheric forecast, and perform forecast calculation based on locational relationship between the areas involved in the ignition and transfer position and the satellite initial adjustment position so as to generate the first aerodynamic force information of the areas involved in the ignition and transfer position; and
at the second moment when the satellite is at the ignition and transfer position acquire the second aerodynamic force information that is collected in a real-time manner and is related to the areas involved in the ignition and transfer position, and is used to perform adjustment and correction when the satellite is at the ignition and transfer position.

Advantageously, the second adjustment module when receiving at least one said instruction for executing the relevant specific event determines the estimated consumption required by the satellite thruster to execute the specific event, and the second adjustment module is configured to:
when the first adjustment module determines at least one said ignition and transfer position based on the initial orbit and the target orbit acquired by the first acquisition module, complete an orbital transfer preplanning process about the ignition and transfer position successfully transferring from the initial orbit to the target orbit by considering the initial orbit, the target orbit, and the ignition and transfer position in a manner that the orbital transfer environment monitoring information is ignored, and generate the corresponding estimated consumption required by completing the orbital transfer preplanning process.

Advantageously, the second adjustment module serves to determine the orbital transfer request mixing ratio coefficients corresponding to the satellite thruster and the inflatable antenna, respectively, based on the first antenna adjustment control information and the estimated consumption while determining aerodynamic force auxiliary coefficient of the orbital transfer environment monitoring information at the first moment, in which:
when the aerodynamic force auxiliary coefficient is smaller than 1, it is determined that the aerodynamic force information influences execution of the relevant specific event as a drag, and the second adjustment module determines the orbital transfer request mixing ratio coefficient corresponding to the inflatable antenna in a manner that influence of the aerodynamic force information is minimized with the aid of the inflatable antenna, and then determines the orbital transfer request mixing ratio coefficient corresponding to satellite thruster based on the orbital transfer request mixing ratio coefficient corresponding to the inflatable antenna in a manner that increase of the estimated consumption is minimized;
when the aerodynamic force auxiliary coefficient is greater than 1, it is determined that the aerodynamic force information influences the execution of the relevant specific event as an aid, and the second adjustment module determines the orbital transfer request mixing ratio coefficient corresponding to the inflatable antenna in a manner that makes the most use of the aerodynamic force information with the aid of the inflatable antenna, and then determines the orbital transfer request mixing ratio coefficient corresponding to the satellite thruster based on the orbital transfer request mixing ratio coefficient corresponding to the inflatable antenna in a manner that the decrease is maximized; and a sum of the orbital transfer request mixing ratio coefficients corresponding to the satellite thruster and the inflatable antenna, respectively, is equal to 1.

Advantageously, the second adjustment module further comprises an adjustment and correction unit, which is configured to: at the second moment, according to difference between the second aerodynamic force information and the first aerodynamic force information acquire an error correction coefficient for the first antenna adjustment control information corresponding to the first aerodynamic force information, and thus be able to perform adjustment and correction in a relatively small adjustment range on satellite orientation information corresponding to the second moment and satellite deployment information corresponding thereto, respectively, based on the error correction coefficient, so as to allow the satellite to accurately match the actually measured second aerodynamic force information during the execution of the relevant specific event, and to update the orbital transfer request mixing ratio coefficient correspondingly based on the corrected first antenna adjustment control information, thereby further accurately controlling consumption of the satellite thruster during the execution of the relevant specific event.

A deployed-volume-controlling method, at least comprises the following steps: based on an initial orbit and a target orbit acquired determining at least one ignition and transfer position, and based on first aerodynamic force information that is acquired at a first moment and is related to areas involved in the ignition and transfer position generating orbital transfer environment monitoring information, and based on the orbital transfer environment monitoring information determining first antenna adjustment control information;
based on the initial orbit and the target orbit determining at least one instruction for executing a relevant specific event, and when receiving the at least one instruction for executing the relevant specific event, determining estimated consumption required by a satellite thruster to execute the specific event;
based on the first antenna adjustment control information and the estimated consumption determining orbital transfer request mixing ratio coefficients corresponding to the satellite thruster and the inflatable antenna, respectively as well as a first control instruction and a second control instruction corresponding thereto, so that the inflatable antenna receives the first control instruction in a manner that an aerodynamic force compensation is made to the satellite thruster that receives the second control instruction, and based on second aerodynamic force information that is acquired at a second moment and is related to areas involved in the ignition and transfer position performing at least one time of adjustment and correction, thereby executing the at least one relevant specific event.

Advantageously, the deployed-volume-controlling method at least comprises the following steps: with the first antenna adjustment control information determined based on the orbital transfer environment monitoring information at least comprising first orientation adjustment duration for antenna orientation adjustment and first deployment adjustment duration for antenna specific surface area adjustment, determining first movement duration based on the one having the greater value between the first orientation adjustment duration and the first deployment adjustment duration, and when the first movement duration does not exceed a preset duration threshold, using the ignition and transfer position and the initial orbit to determine an antenna initial adjustment position corresponding to the first movement duration, and thereby being able to use the antenna initial adjustment position to determine a position of the antenna in the initial orbit when the adjustment of antenna was begun.

Advantageously, the deployed-volume-controlling method further comprises the following steps:
S1: when the first movement duration exceeds the preset duration threshold, determining at least one preset proportional allocation that is used to establish dynamic correlational relationship between the first orientation adjustment duration and the first deployment adjustment duration;
S2: updating the preset proportional allocation in a manner that the first deployment adjustment duration is gradually decreased and the first orientation adjustment duration is gradually increased, so as to determine a second orientation adjustment duration that is corresponding to the preset proportional allocation and is used to update the first orientation adjustment duration and a second deployment adjustment duration that is corresponding to the preset proportional allocation and is used to update the first deployment adjustment duration;
S3: determining a second movement duration that is used to update the first movement duration based on the one having the greater value between the updated first orientation adjustment duration and the updated first deployment adjustment duration, and comparing the updated first movement duration with the preset duration threshold again; and
S4: repeating the previous steps S1-S3 until the first movement duration does not exceed the preset duration threshold, and outputting the first orientation adjustment duration, the first deployment adjustment duration, and the antenna initial adjustment position that are all corresponding to the first movement duration, so as to realize an optimal solution that has both the minimal possible estimated consumption and maximal possible orbital transfer efficiency.

Advantageously, the adjustment and correction process comprises the following steps: at the second moment, according to difference between the second aerodynamic force information and the first aerodynamic force information acquire an error correction coefficient for the first antenna adjustment control information corresponding to the first aerodynamic force information, and thus be able to perform adjustment and correction in a relatively small adjustment range on satellite orientation information corresponding to the second moment and satellite deployment information corresponding thereto, respectively, based on the error correction coefficient, so as to allow the satellite to accurately match the actually measured second aerodynamic force information during the execution of the relevant specific event, and to update the orbital transfer request mixing ratio coefficient correspondingly based on the corrected first antenna adjustment control information, thereby further accurately controlling consumption of the satellite thruster during the execution of the relevant specific event.

Advantageously, the second adjustment module serves to determine the orbital transfer request mixing ratio coefficients corresponding to the satellite thruster and the inflatable antenna, respectively, based on the first antenna adjustment control information and the estimated consumption while determining aerodynamic force auxiliary coefficient of the orbital transfer environment monitoring information at the first moment, in which:
when the aerodynamic force auxiliary coefficient is smaller than 1, it is determined that the aerodynamic force information influences execution of the relevant specific event as a drag, and the second adjustment module determines the orbital transfer request mixing ratio coefficient corresponding to the inflatable antenna in a manner that influence of the aerodynamic force information is minimized with the aid of the inflatable antenna, and then determines the orbital transfer request mixing ratio coefficient corresponding to satellite thruster based on the orbital transfer request mixing ratio coefficient corresponding to the inflatable antenna in a manner that increase of the estimated consumption is minimized;
when the aerodynamic force auxiliary coefficient is greater than 1, it is determined that the aerodynamic force information influences the execution of the relevant specific event as an aid, and the second adjustment module determines the orbital transfer request mixing ratio coefficient corresponding to the inflatable antenna in a manner that makes the most use of the aerodynamic force information with the aid of the inflatable antenna, and then determines the orbital transfer request mixing ratio coefficient corresponding to the satellite thruster based on the orbital transfer request mixing ratio coefficient corresponding to the inflatable antenna in a manner that the decrease of the estimated consumption is maximized; and
a sum of the orbital transfer request mixing ratio coefficients corresponding to the satellite thruster and the inflatable antenna, respectively, is equal to 1.

Advantageously, the process of determining the estimated consumption required at least comprises the following steps: when the first adjustment module determines at least one said ignition and transfer position based on the initial orbit and the target orbit acquired by the first acquisition module, complete an orbital transfer preplanning process about the ignition and transfer position successfully transferring from the initial orbit to the target orbit by considering the initial orbit, the target orbit, and the ignition and transfer position in a manner that the orbital transfer environment monitoring information is ignored, and generate the corresponding estimated consumption required by completing the orbital transfer preplanning process.

Advantageously, the method further comprises the following steps: at the first moment when a satellite is in a satellite initial adjustment position acquire current aerodynamic force information that is collected in a real-time manner and is related to areas involved in the satellite initial adjustment position and is used to provide a parameter set required by an atmospheric forecast, and perform forecast calculation based on locational relationship between the areas involved in the ignition and transfer position and the satellite initial adjustment position so as to generate the first aerodynamic force information of the areas involved in the ignition and transfer position; and
at the second moment when the satellite is at the ignition and transfer position acquire the second aerodynamic force information that is collected in a real-time manner and is related to the areas involved in the ignition and transfer position, and is used to perform adjustment and correction when the satellite is at the ignition and transfer position.

The inflatable antenna of the present invention at least has the following technical benefits:
(1) the disclosed volume-controllable, inflatable antenna of the present invention effectively utilizes the atmospheric drag acting on the satellite by increasing and decreasing the specific surface area, and that is the relative volume of the antenna, without increasing and also orientation deviation duration and fuel consumption of the antenna during orbital transfer, thereby effectively increasing in-orbit lifetime of the satellite and effectively decreasing loss during orientation adaption caused by orientational deviation of the antenna. This enhances timeliness of satellite transfer and accuracy of orbital transfer with less fuel consumption for orbital transfer.
(2) The present invention employs a process of prediction-correction of antenna adjustment based on aerodynamic force information acquired at different time points. Such a staged adjustment provides to not only fast, approximate site adjustment to save time for orbital transfer, but also subsequent, fine adjustment to correct the uncertainty of the predictive results of the previous stage, thereby converging errors in the predictive results generated due to temporal fluctuation and spatial difference to an allowable range. The staged adjustment not only helps to stabilize the process of orbital transfer of the satellite by addressing fluctuation and large adjustment errors as seen in the prior-art one-off adjustment, but also effectively enhances accuracy of orbital transfer and positional precision of the satellite.

To address the shortcomings of the prior art, the present invention provides a spatially deployable, inflatable antenna. The inflatable antenna at least comprises a flexible antenna folding surface and deployment components. The deployment component is composed of at least two stages of deployment components, which can be driven successively with an inflation pressure as a driving force and get connection at different altitudes with respect to the flexible antenna folding surface, respectively, in which, first-stage deployment components are configured to expand outward in response to a driving effect from an inflation pressure acting as a driving force applied thereto, so as to drive at least a part of the flexible antenna folding surface to unfold, and when the first-stage deployment components expand to a first-stage full deployment position, second-stage deployment components in response to a driving force applied thereto expand in stages based on a shape memory effect by releasing shape memory material boards on the flexible antenna folding surface, thereby making the flexible antenna folding surface perform staged, controllable incomplete or complete spatial unfolding from top to bottom in a manner that an effective unfolded area is increased and deployment impact overload is decreased.

The disclosed spatially deployable, inflatable antenna, uses a mechanical structure assisted by the shape memory effect from a shape memory polymer composite material to control the inflation and deployment of the inflatable antenna, thereby achieving a controllable deployment process where staged deployment is controlled by variable inflation. Besides, the completely inflated antenna can be held in position with its own structural geometry without continuous inflation. This reduces variables for deployment control and thus enhances reliability of the deployment process, thereby overcoming the problems of the traditional inflatable antennas about complicated and less reliable deployment control.

Furthermore, the present invention uses a staged and sequential controllable process instead of the conventional one-off deployment process to deploy an inflatable antenna. With the controllable gas-driven deployment components, the present invention make efficient use of the unfolding deployment process of the folding antenna so as to prepare for the second-stage deployment when the first-stage deployment is in process by means of heating at specific sites timely, thereby achieving staged, sequential increase of the working area of the inflatable antenna. Meanwhile, the innate damping of the shape memory material board helps to eliminate the overload from strong impacts generated by instantaneous expansion at beginning and instantaneous constraint at end of deployment, thereby ensuring stable and smooth movement throughout the deployment process and protecting the spacecraft body from impacts and disturbance otherwise caused by other components, leading to safe and reliable in-orbit operation of the spacecraft.

Advantageously, the flexible antenna folding surface has at least two parts of the antenna folding surface that are different in folding/unfolding mechanism, in which, the first antenna folding surface gradually folds/unfolds along a preset route as the first-stage deployment components retract/expand, and the first-stage deployment components are configured to by controllably regulating how an airflow that enters the interior of the first-stage deployment components through at least one first opening flows to and fro along a height direction and a longitudinal extension direction of the interior, release locking of the first-stage deployment components in their retracting/expanding direction and drive them to retract/expand, thereby driving the first antenna folding surface to gradually retract/expand along the preset route and automatically holding the fully retracted/expanded first-stage deployment components in their current expanded position.

Advantageously, the second-stage deployment components are configured to by controllably regulating how an airflow that enters the interior of the second-stage deployment components through at least one second opening flows to and fro along a height direction and a longitudinal extension direction of the interior, drive the second-stage deployment components to expand in stages until they abut against the second antenna folding surface, so that the second-stage deployment components when powered and heated exert the shape memory effect of the at least one shape memory material board on the second antenna folding surface in stages, thereby driving the second antenna folding surface to unfold along the preset route gradually and automatically holding the fully unfolded second antenna folding surface in its current unfolded position with the aid of the shape memory material board. Preferably, the preset route is an extension of the retracting/expanding direction of the first retaining and locking mechanism, and the route of the second antenna folding surface is such determined that it ensures effective control on the deployment progress of the second antenna folding surface.

Advantageously, the first-stage deployment component at least comprises at least one first inflatable support ring, at least one second inflatable support ring, and at least one inflatable ring. Therein, the at least one first inflatable support ring and the at least one second inflatable support ring are connected to the edge of the first antenna folding surface, respectively, so that they are alternately arranged in the direction extending from the open-end surface of the first antenna folding surface. The inflatable ring is configured to be compressed and fit inside the first inflatable support ring and the second inflatable support ring, and use the inflation pressure as its driving force to release locking between the first inflatable support ring and the second inflatable support ring, thereby driving the first inflatable support ring and the second inflatable support ring to expand/compress with respect to each other.

Advantageously, the first-stage deployment component further comprises at least one first retaining and locking mechanism. The first retaining and locking mechanism is configured to lock the relative displacement between the first inflatable support ring and the second inflatable support ring as it is movably connected to both the first inflatable support ring and the second inflatable support ring. The first retaining and locking mechanism can be released from the movable connection with the first inflatable support ring or the second inflatable support ring when receiving an external force generated as the inflatable ring is inflated gradually, thereby unlocking the first-stage deployment components in the retracting/expanding direction.

Advantageously, the second antenna folding surface at least comprises at least one folding rib panel that is installed on the second antenna folding surface and corresponds to the second-stage deployment components. The folding rib panel is configured to be expanded by the second-stage deployment components in a staged manner so that the second-stage deployment components and the shape memory material board on the folding rib panel are movably connected. This enables the shape memory material board to exert its shape memory effect as the resettable heating components on the second-stage deployment components start to heat, and enables the second-stage deployment components to be driven in a staged manner and further expand until they are disconnected from the shape memory material board on the folding rib panel, so that the shape memory material board can drive the shape memory material board to exert its shape memory when the resettable heating components on the second-stage deployment components are heated. Moreover, the second antenna folding surface can be held in the current unfolded position after the shape memory material board is cooled and get hardened.

Advantageously, the second-stage deployment components at least comprise resettable heating components. The resettable heating component is such configured that when the shape memory material board exerts its shape memory effect, it drives at least a part of the second antenna folding surface to gradually unfold along the preset route to arrive at a first working attitude. The first working attitude can resiliently become a second working attitude after the second antenna folding surface performs unfolding of the next stage along the preset route. The first working attitude and the second working attitude can each be movably connected to the shape memory material boards belonging to different stages on the second antenna folding surface, so as to drive the shape memory material boards to exert the shape memory effect. Preferably, the shape memory material board is made of a polymer material that has a shape memory effect. Therein, the first working attitude of the resettable heating component is an attitude at which it is parallel to the expansion direction of the first retaining and locking mechanism. The second working attitude of the resettable heating component is an attitude at which it is perpendicular to the expansion direction of the second retaining and locking mechanism. At both of the attitudes, the shape memory material boards can be heated to exert the shape memory effect.

The present invention further provides a deployment method of a spatially deployable, inflatable antenna. The deployment method at least comprises the following step: using the inflation pressure as the driving force to drive the first-stage deployment components to expand and drive at least a part of the flexible antenna folding surface to unfold. The first-stage deployment components then expand to the first-stage full deployment position, which is an expanded position controlled by different first-stage inflation levels and may be a position at which the first antenna folding surface is completely unfolded. The second-stage deployment components in response to a driving force applied thereto expand in stages based on a shape memory effect by releasing shape memory material boards on the flexible antenna folding surface, thereby making the flexible antenna folding surface perform staged, controllable incomplete or complete spatial unfolding from top to bottom in a manner that an effective unfolded area is increased and deployment impact overload is decreased.

Advantageously, the flexible antenna folding surface has at least two parts of the antenna folding surface that are different in folding/unfolding mechanism. The deployment method further comprises the following steps: gradually folding/unfolding the first antenna folding surface along a preset route as the first-stage deployment components retract/expand, and by controllably regulating how an airflow that enters the interior of the first-stage deployment components through at least one first opening flows to and fro along a height direction and a longitudinal extension direction of the interior, releasing locking of the first-stage deployment components in their retracting/expanding direction and drive them to retract/expand, thereby driving the first antenna folding surface to gradually retract/expand along the preset route and automatically holding the fully retracted/expanded first-stage deployment components in their current expanded position.

Advantageously, the deployment method further comprises the following steps: gradually folding or unfolding the second antenna folding surface along a preset route as the second-stage deployment components retract or expand, and by controllably regulating how an airflow that enters the interior of the second-stage deployment components through at least one second opening flows to and fro along a height direction and a longitudinal extension direction of the interior, driving the second-stage deployment components to expand in stages until they abut against the second antenna folding surface, so that the second-stage deployment components when powered and heated exert the shape memory effect of the at least one shape memory material board on the second antenna folding surface in stages, thereby driving the second antenna folding surface to unfold along the preset route gradually and automatically holding the fully unfolded second antenna folding surface in its current unfolded position with the aid of the shape memory material board.

The inflatable antenna of the present invention at least provides the following technical benefits:
(1) The disclosed spatially deployable, inflatable antenna, uses a mechanical structure assisted by the shape memory effect from a shape memory polymer composite material to control the inflation and deployment of the inflatable antenna, thereby achieving a controllable deployment process where staged deployment is controlled by variable inflation. Besides, the completely inflated antenna can be held in position with its own structural geometry without continuous inflation. This reduces variables for deployment control and thus enhances reliability of the deployment process, thereby overcoming the problems of the traditional inflatable antennas about complicated and less reliable deployment control.
(2) The present invention uses a staged and sequential controllable process instead of the conventional one-off deployment process to deploy an inflatable antenna. With the controllable gas-driven deployment components, the present invention make efficient use of the unfolding deployment process of the folding antenna so as to prepare for the second-stage deployment when the first-stage deployment is in process by means of heating at specific sites timely, thereby achieving staged, sequential increase of the working area of the inflatable antenna. Meanwhile, the innate damping of the shape memory material board helps to eliminate the overload from strong impacts generated by instantaneous expansion at beginning and instantaneous constraint at end of deployment, thereby ensuring stable and smooth movement throughout the deployment process and protecting the spacecraft body from impacts and disturbance otherwise caused by other components, leading to safe and reliable in-orbit operation of the spacecraft.
(3) The disclosed spatially deployable, inflatable antenna can be folded and fixed to a bottom plate. This effectively reduces the package size of the prior-deployment antenna for facilitating satellite launch. The fixed state enables the folded inflatable antenna to endure impacts happening during launch of the satellite and protects the antenna from vibration and collision, thereby ensuring safe and reliable launch and deployment of the inflatable antenna.
(4) the disclosed spatially deployable, inflatable antenna is equipped with a reliable retaining and locking structure that locks a holding torque and interacts with the inflation process, thereby holding the deployed inflatable antenna stably at its working position.

### BRIEF DESCRIPTION OF THE DRAWINGS

FIG. 1 is a block diagram illustrating the simplified module connection of an inflatable antenna according to a preferred mode of the present invention;
FIG. 2 is a schematic diagram of the inflatable antenna according to a preferred mode of the present invention;
FIG. 3 is a simplified front view of a hinge component according to one preferred mode of the present invention;
FIG. 4 is a simplified side view of second-stage deployment components according to one preferred mode of the present invention;
FIG. 5 is a simplified side view of second-stage deployment components according to another preferred mode of the present invention; and
FIG. 6 is a simplified cross-sectional view illustrating a hinge component according to a preferred mode of the present invention.

100: first acquisition module; 200: second acquisition module; 300: first adjustment module; 400: second adjustment module; 201: environment monitoring unit; 202: adjustment and correction unit; 1: first inflatable support ring; 2: second inflatable support ring; 3: inflatable ring; 4: first retaining and locking mechanism; 5: first antenna folding surface; 6: second antenna folding surface; 7: shape memory material board; 8: resettable heating component; 9: bottom plate; 10: second retaining and locking mechanism; 11: first-stage deployment component; 12: second-stage deployment component; 13: first folding rib panel segment; 14: second folding rib panel segment; 15: hinge component; 16: support sub-beam; 17: third folding rib panel segment; 18: fourth folding rib panel segment; 19: resettable spring; 20: heating plate .

### DETAILED DESCRIPTION OF THE INVENTION

The invention as well as a preferred mode of use, further objectives and advantages thereof will be best understood by reference to the following detailed description of illustrative embodiments when read in conjunction with the accompanying drawings.

Herein, the term "module" may refer to one or more of an application-specific integrated circuit, a server, and a server set. For the purpose of the present invention, a module means any hardware, any software or any combination of software and hardware, which is configured to execute functions associated with that "module."

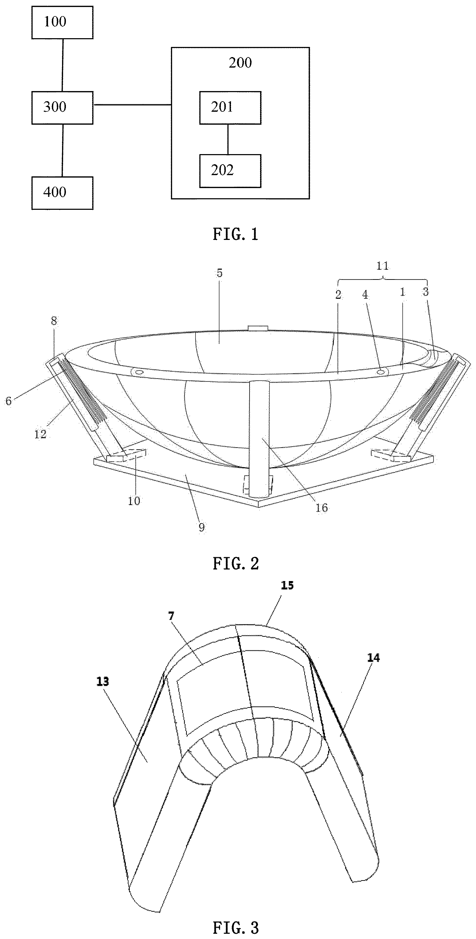

According to one advantageous mode, as shown in FIG. 1, a volume-controllable, inflatable antenna at least comprises a satellite thruster, at least one acquisition module, and at least one adjustment module. Therein, the first adjustment module for adjustment inflatable antenna positional attitude is configured to:
determine at least one ignition and transfer position based on the initial orbit and the target orbit acquired by the first acquisition module, and generate the orbital transfer environment monitoring information based on first aerodynamic force information relates to the areas involved in the ignition and transfer position as acquired by the second acquisition module at a first moment, and determine the first antenna adjustment control information based on the orbital transfer environment monitoring information;
determine at least one ignition and transfer position based on the initial orbit and the target orbit acquired by the first acquisition module, and generate the orbital transfer environment monitoring information based on first aerodynamic force information relates to the areas involved in the ignition and transfer position as acquired by the second acquisition module at a first moment, and determine the first antenna adjustment control information based on the orbital transfer environment monitoring information; and;
based on the first antenna adjustment control information and the estimated consumption determining orbital transfer request mixing ratio coefficients corresponding to the satellite thruster and the inflatable antenna, respectively as well as a first control instruction and a second control instruction corresponding thereto, so that the inflatable antenna receives the first control instruction in a manner that an aerodynamic force compensation is made to the satellite thruster that receives the second control instruction, and based on second aerodynamic force information that is acquired at a second moment and is related to areas involved in the ignition and transfer position performing at least one time of adjustment and correction, thereby executing the at least one relevant specific event.

The disclosed volume-controllable, inflatable antenna of the present invention effectively utilizes the atmospheric drag acting on the satellite by increasing and decreasing the specific surface area, and in turn the relative volume of the antenna, without increasing and also orientation deviation duration and fuel consumption of the antenna during orbital transfer, thereby effectively increasing in-orbit lifetime of the satellite and effectively decreasing loss during orientation adaption caused by orientational deviation of the antenna. This enhances timeliness of satellite transfer and accuracy of orbital transfer with less fuel consumption for orbital transfer. Additionally, timeliness and fuel consumption can be set to preference using the orbital transfer request mixing ratio coefficients, so that the satellite can perform fast transfer under the aerodynamic force or have minimized fuel consumption with a given coefficient, thereby obtaining the optimal control strategy that meets the practical engineering needs.

The present invention employs a process of prediction-correction of antenna adjustment based on relevant aerodynamic force information acquired at different time points. Such a staged adjustment provides not only fast, approximate site adjustment to save time for orbital transfer, but also subsequent, fine adjustment to correct the uncertainty of the predictive results of the previous stage, thereby converging errors in the predictive results generated due to temporal fluctuation and spatial difference to an allowable range. The staged adjustment not only helps to stabilize the process of orbital transfer of the satellite by addressing fluctuation and large adjustment errors as seen in the prior-art one-off adjustment, but also effectively enhances accuracy of orbital transfer and positional precision of the satellite.

Preferably, the first aerodynamic force information is obtained based on estimation according to the current first aerodynamic force information at the current position. It comprises direction and wind power. However, as there are avoidable errors, it is necessary to perform collection again at the ignition and transfer position so as to determine the latest first aerodynamic force information and to improve the forecast process according to the updated first aerodynamic force information. The first aerodynamic force information generates the corresponding antenna adjustment control information, and the new antenna adjustment control information is used for the second orbital transfer, thereby ensuring the accuracy of the resulting orbital transfer.

Preferably, the satellite thruster may be a common, conventional chemical propulsion system or electric propulsion system. Therefore, the ignition and transfer position is not a limitation to the selection of the satellite thruster. Similarly, the ignition and transfer position may be an electric propulsion orbital transfer position. Therein, according to China Patent Publication No. CN201610041639.3 that discloses a geostationary orbit spacecraft electric propulsion transfer orbit control method, an electric propulsion system has advantageous such as high specific impulse, highly adjustable thrust, high control precision, and less propellant use for a given astronautical mission as compared to the traditional chemical propulsion systems.

Preferably, the second acquisition module may be airborne avionic equipment capable of sensing, measuring, solving and outputting atmosphere parameters. It provides the second adjustment module with real-time aerodynamic force information that is used for the atmospheric forecast and comprises a real-time the atmosphere parameter set. Therein, the aerodynamic force information may comprise information like a drag coefficient, a lift coefficient, and rolling torque coefficient. The existing solutions are mainly traditional atmosphere data systems and embedded atmosphere data systems. A traditional atmosphere data system features pitot probe extending out the spacecraft that works with other sensors (e.g. those for the angle of attack/the angle of sideslip/the total temperature) to perform direct measurement of the total pressure, the static pressure, the angle of attack, the angle of sideslip and the total temperature. Then the measurements are input to an atmosphere data computer for solving and correcting operation, thereby accomplishing accurate measurement of atmosphere data. Based on simple principles, this technology has long development history and is quite mature, making it extensively used in military aircraft and commercial aircraft all over the world. On the other hand, an embedded atmosphere data system uses a pressure sensor array embedded around the front end of the spacecraft (or airfoils) to measure pressure distribution over the surface of the spacecraft, and generates atmosphere parameters accordingly. Advent and development of this technology have made an overall promotion of the atmosphere data sensing technology. Such a system is favorable to stealth and acts as an effective solution for measurement of atmosphere data in applications related to a large angle of attack and high Mach-number flying. It significantly expands the application scope of atmosphere data systems. Preferably, the instruction for execution of a relevant specific event may be one directing the satellite to perform orbital transfer or orbital correction in case of orbital deviation. It at least comprises information necessary for orbital transfer, such as information about the initial orbit and the target orbit.

Advantageously, the first antenna adjustment control information determined by the first adjustment module based on the orbital transfer environment monitoring information at least comprises first orientation adjustment duration for antenna orientation adjustment and first deployment adjustment duration for antenna specific surface area adjustment, and first movement duration is determined based on the one having the greater value between the first orientation adjustment duration and the first deployment adjustment duration, in which, when the first movement duration does not exceed a preset duration threshold, the first adjustment module uses the ignition and transfer position and the initial orbit to determine an antenna initial adjustment position corresponding to the first movement duration, and thereby is able to use the antenna initial adjustment position to determine a position of the antenna in the initial orbit when the adjustment of antenna was begun. Preferably, the first movement duration refers the time period required by the satellite moving from the satellite initial adjustment position along the initial orbit to the ignition and transfer position. Since the initial orbit, the ignition and transfer position, and the speed of the satellite are known parameters, it is possible to figure out the first movement duration through calculation.

Advantageously, the first adjustment module is further configured to execute the following steps:
S1: when the first movement duration exceeds the preset duration threshold, determining at least one preset proportional allocation that is used to establish dynamic correlational relationship between the first orientation adjustment duration and the first deployment adjustment duration;
S2: updating the preset proportional allocation in a manner that the first deployment adjustment duration is gradually decreased and the first orientation adjustment duration is gradually increased, so as to determine a second orientation adjustment duration that is corresponding to the preset proportional allocation and is used to update the first orientation adjustment duration and a second deployment adjustment duration that is corresponding to the preset proportional allocation and is used to update the first deployment adjustment duration;
S3: determining a second movement duration that is used to update the first movement duration based on the one having the greater value between the updated first orientation adjustment duration and the updated first deployment adjustment duration, and comparing the updated first movement duration with the preset duration threshold again; and
S4: repeating the previous steps S1-S3 in turn until the first movement duration does not exceed the preset duration threshold, and outputting the first orientation adjustment duration, the first deployment adjustment duration, and the antenna initial adjustment position that are all corresponding to the first movement duration, so as to realize an optimal solution that has both the minimal possible estimated consumption and maximal possible orbital transfer efficiency.

Preferably, with the dynamic correlational relationship, when the proportional allocation coefficient related to one party in the relationship changes, the proportional allocation coefficient related to the other party changes correspondingly. This means the preset duration threshold changes gradually a dynamic as the number of times of iterations increases, and the trend of the change may be a stepped downward trend.

Preferably, the first orientation adjustment duration and the first deployment adjustment duration are determined based on the first aerodynamic force information determine. Therein, the first deployment adjustment duration does not exceed the adjustment duration in which the entire antenna changes from the full deployment position to the full storage position. With the aid of the first aerodynamic force information, the antenna can be unfolded to a deployment state. With the first aerodynamic force information as the drag, the antenna can be folded to a storage state for minimizing the drag area, but the first orientation adjustment duration corresponding to the first aerodynamic force information has to be adjusted. At least one movement duration is determined based on the one having the greater value between the first orientation adjustment duration and the first deployment adjustment duration. The movement duration is then combined with the ignition and transfer position to determine the antenna initial adjustment position. The antenna initial adjustment position is the position on which the antenna starts to adjust its orientation and deployment area. This ensures that when rotating to the ignition and transfer position, the antenna has been adjusted to the predetermined orientation and the predetermined deployment area based on the predicted first aerodynamic force information.

Where the movement duration does not exceed the preset threshold duration, wherein any preset threshold duration that is within the movement duration is an acceptable duration for dealignment from the ground field, the antenna may have its adjustability limited by setting of the preset threshold duration in advance, thereby preventing over-rotation and/or over-unfolding of the antenna when the system tries to make the most use of the aerodynamic force information/decrease the aerodynamic force information that significantly increases the duration of misalignment with the ground field and seriously degrades the communication quality between the satellite and the earth. When the movement duration exceeds the preset threshold duration, by controlling the preset proportional allocation between the first orientation adjustment duration and the first deployment adjustment duration, it is possible to further shorten the duration of misalignment with better aid, until the movement duration becomes not exceeding the preset threshold duration again. Alternatively, with a preferred approach that is obtained by re-analyzing the huge amount of data collected during orbital transfer of other satellites, it is possible to set a preferred proportional allocation directly.

Since there are cases where the antenna has been redirected to position when it has not been fully unfolded, the movement duration is determined as the one having the greater duration between the rotation duration and the deployment duration, namely the deployment duration. There are also cases where the antenna has been fully unfolded/folded when the rotation has not been completed. In these cases, the movement duration shall be the one having the greater duration between the rotation duration and the deployment duration, namely the rotation duration. If the rotation duration is smaller than the deployment duration, it means that the antenna has been turned to position when it has not been fully unfolded. At this time, the movement duration is the one having the greater value between the rotation duration and the deployment duration, namely the deployment duration, and the satellite has lost its alignment with the ground field during the movement duration. If the rotation duration is greater than the deployment duration, it means that the antenna has been fully unfolded when it has not been rotated to position. At this time, the movement duration is the one having the greater value between the rotation duration and the deployment duration, namely the rotation duration. In either case, the duration having the greater value is taken. After the satellite completes its orbital transfer mission, the antenna has to be realigned with the ground field. Thus, it is necessary to determine the new rotation duration and the new deployment duration when the antenna is realigned. This maximizes the help to the combustion thruster for orbital transfer, and reduces fuel consumption, while minimizing the misalignment with the ground field, thereby allowing fast orbital transfer and quick recovery of communicative connection between the antenna and the ground field.

Advantageously, the second adjustment module at least comprises an environment monitoring unit, which is configured to:
at the first moment when a satellite is in a satellite initial adjustment position acquire current aerodynamic force information that is collected in a real-time manner and is related to areas involved in the satellite initial adjustment position and is used to provide a parameter set required by an atmospheric forecast, and perform forecast calculation based on locational relationship between the areas involved in the ignition and transfer position and the satellite initial adjustment position so as to generate the first aerodynamic force information of the areas involved in the ignition and transfer position; and
at the second moment when the satellite is at the ignition and transfer position acquire the second aerodynamic force information that is collected in a real-time manner and is related to the areas involved in the ignition and transfer position, and is used to perform adjustment and correction when the satellite is at the ignition and transfer position.

Preferably, the forecast calculation process may involve establishing a diverse information database based on other satellites by performing information exchange with those other satellites, wherein the diverse information database at least comprises correspondence relationship between the current aerodynamic force information of those other satellites and the first aerodynamic force information in different relative locations, in which the correspondence relationship may comprise one-to-one correspondence relationship or coefficient proportional relationship between actual data or relationship that facilitates forecast of the aerodynamic force information, such as relationship with the trend of variation during the duration from the first moment to the second moment, so that the current satellite can get the forecasted first aerodynamic force information readily by making information matching using the known locational relationship and the current aerodynamic force information. Since the atmosphere in the stratosphere where high altitude flight is performed mainly moves horizontally, the airflow is relatively stable and predictable. With the support of the huge amount of actual data, the forecast calculation process for the aerodynamic force can be completed rapidly and reliably to get the forecasted information. Preferably, forecast calculation process may be one as described in China Patent Publication No. CN105874479A. The known process is based on a meteorologic model expressed as a differential equation. The differential equation describes the atmospheric behavior in certain temporal and spatial domains. The temporal domain and the spatial domain are represented by given initial and boundary conditions, respectively. Preferably, the locational relationship between the areas involved in the ignition and transfer position and the satellite initial adjustment position may be a value of relative displacement along the initial orbit between the two points. However, since there are temporal fluctuation and spatial difference, errors unavoidably exist between the forecast result and the actual time and actual position. These errors can be converged into the allowable error range using the subsequent further correction process.

Advantageously, the second adjustment module serves to determine the estimated consumption required by the satellite thruster to execute the specific event when receiving at least one instruction for execution of the relevant specific event. The second adjustment module is configured to:
when the first adjustment module determines at least one said ignition and transfer position based on the initial orbit and the target orbit acquired by the first acquisition module, complete an orbital transfer preplanning process about the ignition and transfer position successfully transferring from the initial orbit to the target orbit by considering the initial orbit, the target orbit, and the ignition and transfer position in a manner that the orbital transfer environment monitoring information is ignored, and generate the corresponding estimated consumption required by completing the orbital transfer preplanning process. Preferably, the orbital transfer preplanning process is about acquiring the speeds of the satellite when it is in the initial orbit and in the target orbit based on the initial orbit, the target orbit, and the ignition and transfer, and perform forecast calculation to obtain the estimated consumption required by the satellite thruster to complete the specific event without considering the orbital transfer environment monitoring information, namely the potential influence of the aerodynamic force on orbital transfer of the satellite.

Advantageously, the second adjustment module serves to determine the orbital transfer request mixing ratio coefficients corresponding to the satellite thruster and the inflatable antenna, respectively, based on the first antenna adjustment control information and the estimated consumption while determining aerodynamic force auxiliary coefficient of the orbital transfer environment monitoring information at the first moment. Preferably, as disclosed in China Patent Publication No. CN108820260A related to a mid-term orbit prediction method, apparatus of low orbit spacecraft, storage medium, the atmospheric drag perturbation, as the most important factor, i.e., the disturbing force in the orbit determination and orbit prediction model is analyzed to provide specific methods for determining the atmosphere density parameter, the spacecraft equivalent windward area parameter, and the atmospheric drag coefficient. As another example, China Patent Publication No. CN107588921A provides a method for measuring atmospheric parameters of aircraft. Furthermore, China Patent Publication No. CN102809377B discloses an inertia/aerodynamic model combined navigation method for aircraft, which uses navigation parameters obtained using an aerodynamic model to assist an inertia navigation system, so as to according to the provided dynamic equation and aircraft aerodynamic parameters of aircraft, with the use of the known information of the aircraft such as the aerodynamic parameter, the appearance parameter, the control amount and the rotation parameter, to determine the resultant external force and the torque acting on the aircraft. Similarly, with the given inflatable antenna deployment extent and relative orientation, combined with the known parameters of the satellite itself, it is possible to determine a parameter set required by atmospheric forecast, such as the atmospheric density parameter, the spacecraft equivalent windward area parameter, the atmospheric drag coefficient. Then with the use of a dynamic equation and/or an aerodynamic equation, it is further possible to determine the resultant external force and the torque applied to the satellite by the aerodynamic force information, in order to quantify the atmospheric effects.

When the aerodynamic force auxiliary coefficient is smaller than 1, it is determined that the aerodynamic force information influences execution of the relevant specific event as a drag, and the second adjustment module determines the orbital transfer request mixing ratio coefficient corresponding to the inflatable antenna in a manner that influence of the aerodynamic force information is minimized with the aid of the inflatable antenna, and then determines the orbital transfer request mixing ratio coefficient corresponding to satellite thruster based on the orbital transfer request mixing ratio coefficient corresponding to the inflatable antenna in a manner that increase of the estimated consumption is minimized.

Therein, the aerodynamic force auxiliary coefficient may be an included angle variable in a range of 0°~180° and defined between an aerodynamic vector in the first aerodynamic force information and the flight direction vector during the ignition and transfer, and the ration between a fixed angle and the included angle is the aerodynamic force auxiliary coefficient. Preferably, the orbital transfer environment monitoring information determined using the first aerodynamic force information collected at the first moment comprises the aerodynamic force auxiliary coefficient.

Therein, the fixed angle may be of any value in the range of 0°∼90°, such as 35°, 45° or 90°. The fixed angle is based on a determination about whether the current aerodynamic vector can be adjusted to increase or decrease aerodynamic effects by changing the orientation of the antenna and/or adjusting the deployment of the antenna. For example, assuming that the included angle is 180°, the aerodynamic force acts as a drag on specific events of the satellite such as orbital transfer, and it is determined that the aerodynamic force auxiliary coefficient is smaller than 1. At this time, how much the inflatable antenna should be deployed/rotated can be determined in a manner that the influence from the aerodynamic force information is minimized. For example, the antenna may be fully folded or may be rotated away from its windward position to reduce the windward surface area and decrease the drag coefficient. In this way, the first antenna adjustment control information can be determined from the orbital transfer environment monitoring information.

With the first antenna adjustment control information determined, it is possible to quantify the atmospheric effects, thereby determining the resultant external force and the torque applied to the satellite by the aerodynamic force information. Based on the orbital transfer preplanning process, the corresponding estimated consumption required by the orbital transfer preplanning process and the estimated resultant external force and the estimated torque acting on the satellite are generated. The value obtained by dividing the resultant external force or torque applied to the satellite form the aerodynamic force information by the sum of the resultant external force or torque applied to the satellite by the aerodynamic force information and the estimated the resultant external force or estimated torque applied to the satellite by the satellite thruster is the orbital transfer request mixing ratio coefficient corresponding to the inflatable antenna. Since the sum of the orbital transfer request mixing ratio coefficients corresponding to the satellite thruster and to the inflatable antenna, respectively, is equal to 1, the orbital transfer request mixing ratio coefficient corresponding to the satellite thruster can then be determined on the basis of the determined orbital transfer request mixing ratio coefficient corresponding to the inflatable antenna in a manner that the estimated consumption is minimized.

When the aerodynamic force auxiliary coefficient is greater than 1, it is determined that the aerodynamic force information influences the execution of the relevant specific event as an aid, and the second adjustment module determines the orbital transfer request mixing ratio coefficient corresponding to the inflatable antenna in a manner that makes the most use of the aerodynamic force information with the aid of the inflatable antenna, and then determines the orbital transfer request mixing ratio coefficient corresponding to the satellite thruster based on the orbital transfer request mixing ratio coefficient corresponding to the inflatable antenna in a manner that the decrease of the estimated consumption is maximized. Therein, a sum of the orbital transfer request mixing ratio coefficients corresponding to the satellite thruster and the inflatable antenna, respectively, is equal to 1.

Advantageously, second adjustment module further comprises an adjustment and correction unit, which is configured to: at the second moment, according to difference between the second aerodynamic force information and the first aerodynamic force information acquire an error correction coefficient for the first antenna adjustment control information corresponding to the first aerodynamic force information, and thus be able to perform adjustment and correction in a relatively small adjustment range on satellite orientation information corresponding to the second moment and satellite deployment information corresponding thereto, respectively, based on the error correction coefficient, so as to allow the satellite to accurately match the actually measured second aerodynamic force information during the execution of the relevant specific event, and to update the orbital transfer request mixing ratio coefficient correspondingly based on the corrected first antenna adjustment control information, thereby further accurately controlling consumption of the satellite thruster during the execution of the relevant specific event.

The present invention discloses an inflatable antenna. According to one advantageous mode, it at least comprises an inflatable antenna and a volume-controlling module. As shown in FIG. 1, the volume-controlling module at least comprises a satellite thruster, at least one acquisition module and at least one adjustment module. The volume-controlling module is connected to the controller of the inflatable antenna, thereby controlling the deployment of the inflatable antenna. Each of the acquisition module and the adjustment module may be one or more of an application-specific integrated circuit, a server, and a server set.

Therein, the first adjustment module for adjusting a positional attitude of the inflatable antenna serving to determine orbital transfer request mixing ratio coefficients corresponding to the satellite thruster and the inflatable antenna, respectively, as well as a first control instruction and a second control instruction corresponding thereto based on first antenna adjustment control information determined according to orbital transfer environment monitoring information determined by the acquisition module and estimated consumption for the satellite thruster to execute at least one specific event determined according to an initial orbit and a target orbit, so that the first adjustment module of the inflatable antenna receives the first control instruction in a manner that an aerodynamic force compensation is made to a second adjustment module of the satellite thruster that receives the second control instruction, and perform at least one time of adjustment and correction operation based on second aerodynamic force information related to areas involved in a ignition and transfer position acquired by a second acquisition module at a second moment so as to execute the at least one specific event.

As shown in FIG. 2, the inflatable antenna comprises a flexible antenna folding surface and deployment components. The deployment components being composed of at least the deployment components of two stages that use an inflation pressure as a driving force to drive successively and get connection with at least the deployment components of two stages at different altitudes with respect to the flexible antenna folding surface, respectively. first-stage deployment components 11 are configured to expand outward in response to a driving effect from an inflation pressure acting as a driving force applied thereto, so as to drive at least a part of the flexible antenna folding surface to unfold, and when the first-stage deployment components 11 expand to a first-stage full deployment position, second-stage deployment components 12 in response to a driving force applied thereto expand in stages based on a shape memory effect by releasing shape memory material boards 7 on the flexible antenna folding surface, thereby making the flexible antenna folding surface perform staged, controllable incomplete or complete spatial unfolding from top to bottom in a manner that an effective unfolded area is increased and deployment impact overload is decreased.

The first-stage deployment component 11 at least comprises a first inflatable support ring 1 and a second inflatable support ring 2 each having a curved shaped and defining therein a hollow chamber. The first inflatable support ring 1 and the second inflatable support ring 2 may be telescoped and folded so that the first antenna folding surface 5 can be compressed and folded in its height direction and axial direction, thereby reducing the space it takes up.

Preferably, the first inflatable support ring 1 and the second inflatable support ring 2 are alternately and concentrically arranged in a peripheral direction. Preferably, it has two first inflatable support rings 1 and two second inflatable support rings 2. Each first inflatable support ring 1 is flanked by two second inflatable support rings 2 and is connected to the two second inflatable support ring 2 in a telescoped manner. In particular, the first inflatable support ring 1 is partially received in its two adjacent second inflatable support rings 2. Alternatively, the first inflatable support ring 1 is partially mounted around its two adjacent second inflatable support rings 2. Alternatively, the first inflatable support ring 1 has its one end partially mounted around one of the two adjacent second inflatable support rings 2 and has its opposite partially received in the other of the two adjacent second inflatable support rings 2. In any of the above cases, the deployment process of the first antenna folding surface 5 is supported.

The inflatable antenna at least comprises an inflatable ring 3 that is circular in shape and flexibly foldable. The inflatable ring 3 when compressed and folded can be received in the first inflatable support ring 1 and the second inflatable support ring 2. To be compressed and folded, the inflatable ring 3 may be provided with a plurality of folding lines arranged in its periphery direction. The folding lines have their longitudinal direction parallel to the central axis of the inflatable ring 3. The outer wall may be formed like a common extending hose, or formed into another structure suitable to be folded and stored in the internal chamber of the first inflatable support ring 1 and/or the second inflatable support ring 2, without limitation.

Preferably, the first inflatable support ring 1 and each of its adjacent second inflatable support rings 2 are fixed with each other by means of a first retaining and locking mechanism 4. The first retaining and locking mechanism 4 is such configured that when it departs from the first inflatable support ring 1 and the second inflatable support ring 2, it is fixed with respect to the outer wall of the inflatable ring 3, thereby preventing the inflatable ring 3 from rotating outward. In other words, after the first retaining and locking mechanism 4 is propped out the first inflatable support ring 1 and the second inflatable support ring 2 by the inflatable ring 3, it still stays on the first inflatable support ring 1 or on the second inflatable support ring 2, so as to prevent the inflatable ring 3 from extending toward the outside of the first inflatable support ring 1 or the second inflatable support ring 2 as it otherwise moves toward the first retaining and locking mechanism 4. The outward rotation of the inflatable ring 3 means its rotation in a direction perpendicular to the outer wall of the inflatable ring 3.

Preferably, the first retaining and locking mechanism 4 is configured to lock the first inflatable support ring 1 and the second inflatable support ring 2 by preventing relative sliding therebetween in a manner that the first inflatable support ring 1 and the second inflatable support ring 2 are telescoped with each other in the extension directions of their ring bodies, respectively, and to unlock the first inflatable support ring 1 and the second inflatable support ring 2 by allowing relative sliding therebetween in a manner that the inflatable ring 3 is turned to an inflated state from a compressed state. Preferably, the first retaining and locking mechanism 4 may be a retaining and locking pin whose pin body extends in a direction perpendicular to the outer wall of the first inflatable support ring 1. Preferably, when the first inflatable support ring 1 is mounted around the second inflatable support ring 2, the retaining and locking pin can pass through a first through hole on the first inflatable support ring 1 and a second through hole on the second inflatable support ring 2 successively to retain the rings. In addition, the retaining and locking pin is provided with a resettable spring member whose one end is fixed to the inner wall of the first through hole inner wall and thereby held in position.

Preferably, in the process where the inflatable ring 3 is turned from its folded state to its inflated state, since the inflated inflatable ring 3 abuts against the end portion of the retaining and locking pin and pushes the retaining and locking pin to exit the first through hole and the second through hole, the first inflatable support ring 1 and the second inflatable support ring 2 are pushed by the being inflated inflatable ring 3 and move to release the telescoped connection therebetween. In this way, as the inflatable ring 3 gradually expands, the compressed and folded first antenna folding surface 5 can be preliminarily unfolded.

The inflatable ring 3 contains therein at least an airflow that can be controllably regulated and can enter the inflatable ring 3 through at least one first opening. The at least one first opening formed on the wall of the inflatable ring 3 allows the airflow to move to and fro in the inflatable ring 3 in a manner that the airflow inflates the inflatable ring 3 both in the longitudinal direction and in the transversal direction, and that the first inflatable support ring 1 and the second inflatable support ring 2 are released from the locking therebetween and move away from each other as the inflatable ring 3 expands. In this way, the first antenna folding surface 5 undergoes incomplete or complete spatial unfolding in a manner that the effective deployed area is increased and the deployment impact overload is decreased.

The first-stage deployment components further comprise second-stage deployment components 12 provided on the support sub-beams 16. The second-stage deployment components 12 each at least comprises a second retaining and locking mechanism 10 for unfolding and/or holding the first antenna folding surface 5. The second retaining and locking mechanism 10 is such installed on the support sub-beam 16 that it can extend away from the support sub-beam 16. Therein, it may extend away from the support sub-beam 16 by means of a telescoped structure or a folding structure, without limitation. Preferably, the second retaining and locking mechanism 10 may be of a structure similar to a pneumatic rod, which with continuous charging of gas, can extend in a staged manner and then be held in an extended position. By filling gas into the sealed internal chamber of the second retaining and locking mechanism 10, climbing can be realized. A fluid-driven biomorphic robot has good load carrying capacity and can actively deform. Such a robot can be made of an inflexible material to solve the problems of a rigid material about high rigidity and bulkiness and to enjoy better control flexibility than that of a traditional rigid material. Preferably, the resettable heating component 8 is always held at the top of the second retaining and locking mechanism 10 and connected to the hinge component 15.

Preferably, the second antenna folding surface 6 is folded layer by layer. The second antenna folding surface 6 have a ring-like shape with a certain width. The second antenna folding surface 6 is folded layer by layer in its width direction, so that the folding surface at its outer edge is stored on an inner-layer folding surface. The second antenna folding surface 6 is provided with a folding rib panel placed corresponding to the second-stage deployment component 12. The folding rib panel is composed of a plurality of folding rib panel segments that are connected mutually. The folding rib panel is such configured that it can be folded with the second antenna folding surface 6 in the width direction of the second antenna folding surface 6. Each two folding rib panel segments are rotatably connected through a hinge component 15 so that the two folding rib panel segments are slightly separated by a gap for receiving the resettable heating component 8. The gap thus allows the resettable heating component 8 to be placed between the two folding rib panel segments and to abut against or closely fit with the hinge component 15. Also, when the resettable heating component 8 is powered and heated, the hinge component 15 between the two folding rib panel segments can expand in the predetermined direction to make the two folding rib panel segments become standing abreast.

As shown, the hinge component 15 has at least one shape memory material board fixed thereto. Each shape memory material board can drive and hold the corresponding hinge structure. When the shape memory material board is heated by the resettable heating component 8, its temperature increases until the glass transition temperature or a higher temperature. At this time, it can be bent to form a certain included angle. The certain included angle is between 0° and 180°. The shape memory material board is then cooled to a temperature below its glass transition temperature under constraint. The constraint is removed after the shape memory material board is cured. The shape memory material board at this time is set in its bent position and unable to return. During the next heating cycle, the temperature of the shape memory material board raises again until its glass transition temperature or above. Then the shape memory material board automatically return to its initial flat state, thereby achieving flattening operation of the hinge component 15.

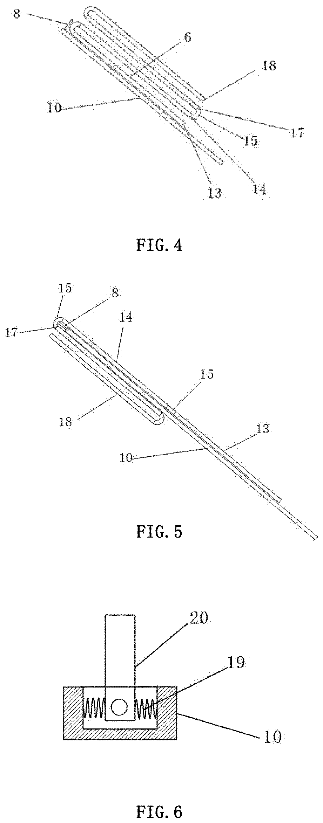

As shown in FIG. 6, the second retaining and locking mechanism 10 driven by gas expands in the preset direction. The second retaining and locking mechanism 10 is atop provided with a resettable heating component 8. Therein, the resettable heating component 8 comprises a resettable spring and a heating plate that is involved in a heating layer. The resettable spring is configured to be normally tensioned to bias the heating plate to rotate toward the second retaining and locking mechanism 10, and to be further tensioned when the heating plate is rotated away from the second retaining and locking mechanism 10. Therein, the heating plate involved in the heating layer may be a resistive heating device and is not limited to the illustrated structure. The second retaining and locking mechanism 10 may be a pneumatic rod, which with continuous charging of gas, can extend in a staged manner and then be held in an extended position maintaining current length. Preferably, a rope connected to the second retaining and locking mechanism 10 and the folding rib panel, respectively, can be used to control the folding process of the second antenna folding surface 6.

As shown in FIG. 4, the folding rib panel at least comprises a first folding rib panel segment 13, a second folding rib panel segment 14, a third folding rib panel segment 17, and a fourth folding rib panel segment 18 that are connected together by hinge components 15. When the second retaining and locking mechanism 10 and the support sub-beam 16 extend in the same direction, with holding of the tensioned resettable spring, the heating plate is positioned on the outer wall of the hinge component 15 between the first folding rib panel segment 13 and the second folding rib panel segment 14, and fits closely to the outer wall of the hinge component 15 or is otherwise movably connected thereto, so that when the heating plate is powered and heated, the shape memory material board movably connected to the heating plate is softened and automatically returns to its flat, initial state before bending. At the same time, the shape memory material board drives the second folding rib panel segment 14 to turn outward, thereby achieving the first unfolding stage of the second antenna folding surface 6.

As shown in FIG. 5, as the hinge component 15 between the first folding rib panel segment 13 and the second folding rib panel segment 14 cools down to its glass transition temperature or below, the hinge component 15 is hardened to keep its flat state and unable to return. The first folding rib panel segment 13 and the second folding rib panel segment 14 now include an angle of 180° or another preset obtuse angle. At the same time, since the second folding rib panel segment 14 is turn outward and applies a downward force to the heating plate below it, the heating plate changes its position from being perpendicular to the second retaining and locking mechanism 10 to being parallel to the body of the second retaining and locking mechanism 10. Also, at this time, the second retaining and locking mechanism 10 is positioned between the first folding rib panel segment 13 and the second folding rib panel segment 14. With the continuously introduced gas, the second retaining and locking mechanism 10 is further extended. The second retaining and locking mechanism 10 then drives the resettable heating component 8 on its top to move, until the resettable heating component 8 is positioned at the hinge component 15 between the second folding rib panel segment 14 and the third folding rib panel segment 17. Moreover, the thermal effect of the resettable heating component 8 softens the shape memory material board in the hinge component 15 so that the shape memory material board can automatically return to its initial, unbent state. The shape memory material board drives the third folding rib panel segment 17 to turn outward, thereby achieving the second unfolding stage of the second antenna folding surface 6. With the continuously introduced gas, the second retaining and locking mechanism 10 is further extended, so the resettable heating component 8 departs from the hinge component 15. The hinge component 15 between the second folding rib panel segment 14 and the third folding rib panel segment cools down to its glass transition temperature and becomes hard again, so that the second folding rib panel segment 14 and the third folding rib panel segment keep the unfolded position and are prevented from deformation.

Since the second folding rib panel segment 14 and the third folding rib panel segment 17 are in a flat state at the angle of 180° or at any other predetermined angle, the heating plate is below the hinge component 15 between the second folding rib panel segment 14 and the third folding rib panel segment 17, and are substantively parallel to the body of the second retaining and locking mechanism 10. With the continuously introduced gas, the second retaining and locking mechanism 10 is further extended to drive the resettable heating component 8 to move toward the hinge component 15 between the third folding rib panel segment 17 and the fourth folding rib panel segment 18. At this time, since the fourth folding rib panel segment 18 is not unfolded and is placed on the third folding rib panel segment 17, the heating plate has its downward force is removed, and moves toward the body of the second retaining and locking mechanism 10 in response to the elastic potential energy from the resettable spring, until it is positioned on the outer wall of the hinge component 15 between the third folding rib panel segment 17 and the fourth folding rib panel segment 18 and closely fits the outer wall of the hinge component 15 or is otherwise movably connected thereto, so the shape memory material board in the hinge component 15 is softened and automatically deform. Consequently, the shape memory material board returns to its initial, unfolded state.

Preferably, in the process that the inflatable ring 3 is opened to the desired position, which usually refers to a position where the inflatable ring 3 is fully opened so that the rotational angle of the support sub-beam 16 with respect to the bottom plate 9 is not smaller than 90°. With the continuous introduction of gas, a vent valve set at the joint between the inflatable ring 3 and the second retaining and locking mechanism 10 is open to provide the second retaining and locking mechanism 10 with an auxiliary drawing force. The second retaining and locking mechanism 10 extends in stages as the gas is continuously introduce. By control gas filling/holding the current pressure level/stopping inflation, the second retaining and locking mechanism 10 is controlled to extend in stages and/or get locked at the current length.

The second-stage deployment component 12 at least comprises support sub-beams 16 for supporting the first inflatable support rings 1 and the second inflatable support rings 2. The support sub-beam 16 has its two ends movably connected to at least one apex of the bottom plate 9 and the outer wall of the first inflatable support ring 1 or the second inflatable support ring 2, respectively. The first inflatable support ring 1 and the second inflatable support ring 2 are such attached to the body of the support sub-beams 16 that they can rotate with respect to the support sub-beams. The first inflatable support ring 1 and the second inflatable support ring 2 move away from and get disconnected from each other in a manner that their respective support sub-beams 16 rotate away from the bottom plate 9. Since the folded first antenna folding surface 5 has its one end connected to one portion of the support sub-beam 16, the rotating support sub-beams 16 drive the first antenna folding surface 5 to be folded or unfolded. Preferably, the support sub-beam 16 can perform unidirectional rotation about the apex of the bottom plate 9 when the first antenna folding surface 5 undergoes incomplete unfolding so as to mechanically lock the deployed first inflatable support ring 1 or the second inflatable support ring 2, until the second retaining and locking mechanism 10 when receiving an external force releases the support sub-beam 16 from restriction of unidirectional rotation, and allows automatic restoration by folding at least a part of the flexible antenna. Therein, the unidirectional rotation ensures that when the first antenna folding surface 5 is unfolded during inflation, the support sub-beam 16 is limited in terms of rotation with respect to the bottom plate 9, thereby holding the first antenna folding surface 5 at the corresponding unfolded position without being folded back by the reverse rotation in case of stop of gas supply.

Therein, the second retaining and locking mechanism 10 is movably connected to the support sub-beam 16 and can be moved between a locking position and a non-locking position by an external force applied thereto. The locking position is for rotatable coaction between the second retaining and locking mechanism 10 and the support sub-beam 16 and for preventing the support sub-beam 16 from rotating in at least one rotational direction. The non-locking position is for disconnection between the second retaining and locking mechanism 10 and the support sub-beam 16, and for releasing the support sub-beam 16 from the foregoing rotational restriction. Preferably, the second retaining and locking mechanism 10 may be pawl, and the support sub-beam 16 is provided with a matching ratchet at the end portion near the bottom plate 9. When the pawl is in the locking position, the ratchet can only rotate in one direction with its reverse rotation making engagement with the pawl. When the pawl is in the non-locking position, the reverse rotation of the ratchet is allowed, and thus with the effects of at least the gravity or another external force, automatic return in a reverse direction works to drive the part of the flexible antenna folding surface that is incompletely or completely unfolded to be folded. Preferably, the bottom plate 9 may be provided with a controllable rotating rod and a spring component installed on the support sub-beam 16. The controllable rotating rod is movably connected to the second retaining and locking mechanism 10 and, when powered, can be controllably moved to and fro with respect to the second retaining and locking mechanism 10. Preferably, the controllable rotating rod works like a valve core in a two-position five-way valve. When not powered, the valve core returns to its initial state in virtue of the spring force. When powered, the valve core is attracted to the powered side, and thereby the to-and-from movement of the valve core is controlled. When the controllable rotating rod moves forward and comes to one side of the second retaining and locking mechanism 10, the second retaining and locking mechanism 10 is prevented from further relative rotation at the relevant side, and thereby the rotation of the support sub-beam 16 with respect to the bottom plate is prevented. However, the second retaining and locking mechanism 10 is allowed to be pushed to move toward the opposite side. Thereby, the support sub-beam 16 can be rotated in one direction by tensioning the spring component but is prevented from rotating in the other direction. When the controllable rotating rod moves backward and gets disconnected from the second retaining and locking mechanism 10, the second retaining and locking mechanism 10 is no more prevented from bi-directional rotation. Thereby, reverse rotation of the support sub-beam 16 is possible so that the support sub-beam 16 can automatically rotate in the reverse way when the elastic potential energy of the spring component acts thereon.

The inflatable antenna at least comprises a flexible antenna folding surface. The flexible antenna folding surface is divided into two parts, namely a first antenna folding surface 5 and a second antenna folding surface 6 by folding/unfolding ways. The first antenna folding surface 5 and the second antenna folding surface 6 are integratedly formed to form the flexible antenna folding surface. Therein, the foregoing at least part of the flexible antenna folding surface may be right the first antenna folding surface 5. The shape of the unfolded first antenna folding surface 5 is an open-end hemispheric shape. The cup-like end portion of the first antenna folding surface 5 is fixed to the outer wall of the first inflatable support ring 1 outer wall and the outer wall of the second inflatable support ring 2, respectively. The first antenna folding surface 5 has an apex located on the bottom plate 9 for carrying the inflatable antenna, so that the first antenna folding surface 5 can be folded or unfolded in a manner that the first inflatable support ring 1 and the second inflatable support ring 2 slide with respect to each other. The first antenna folding surface 5 is such configured that when the inflatable ring 3 is inflated, it expands along a curved surface inclinedly oriented with respect to an end surface formed by the first inflatable support ring 1, the second inflatable support ring 2, and the inflatable ring 3 jointly.

The present invention has been described with reference to the preferred embodiments and it is understood that the embodiments are not intended to limit the scope of the present invention. Moreover, as the contents disclosed herein should be readily understood and can be implemented by a person skilled in the art, all equivalent changes or modifications which do not depart from the concept of the present invention should be encompassed by the appended claims.

## Claims

1. An inflatable antenna, particularly a volume-controllable inflatable antenna, being **characterized in** at least comprising the inflatable antenna and a volume-controlling module, the inflatable antenna comprising a flexible antenna folding surface and deployment components, the deployment component is composed of at least two stages of deployment components, which can be driven successively with an inflation pressure as a driving force and get connection at different altitudes with respect to the flexible antenna folding surface, respectively,
the volume-controlling module at least comprising a satellite thruster, at least one acquisition module, and at least one adjustment module, wherein
a first adjustment module for adjusting a positional attitude of the inflatable antenna serving to determine orbital transfer request mixing ratio coefficients corresponding to the satellite thruster and the inflatable antenna, respectively, as well as a first control instruction and a second control instruction corresponding thereto based on first antenna adjustment control information determined according to orbital transfer environment monitoring information by the acquisition module and estimated consumption for the satellite thruster to execute at least one specific event determined according to an initial orbit and a target orbit, so that the first adjustment module of the inflatable antenna receives the first control instruction in a manner that an aerodynamic force compensation is made to a second adjustment module of the satellite thruster that receives the second control instruction, and performs at least one time of adjustment and correction operation based on second aerodynamic force information related to areas involved in an ignition and transfer position acquired by a second acquisition module at a second moment so as to execute the at least one specific event.

2. The inflatable antenna of claim 1, wherein the first adjustment module for adjusting the positional attitude of the inflatable antenna is further configured to:
determine at least one ignition and transfer position based on the initial orbit and the target orbit acquired by the first acquisition module, and generate the orbital transfer environment monitoring information based on first aerodynamic force information relates to the areas involved in the ignition and transfer position as acquired by the second acquisition module at a first moment, and determine the first antenna adjustment control information based on the orbital transfer environment monitoring information; and
determine at least one instruction for executing a relevant said specific event based on the initial orbit and the target orbit, and determine the estimated consumption for the satellite thruster to execute the specific event when receiving the instruction for executing the relevant specific event.

3. The inflatable antenna of claim 2, wherein the first antenna adjustment control information determined by the first adjustment module based on the orbital transfer environment monitoring information at least comprises first orientation adjustment duration for antenna orientation adjustment and first deployment adjustment duration for antenna specific surface area adjustment, and first movement duration is determined based on the one having the greater value between the first orientation adjustment duration and the first deployment adjustment duration, in which,
when the first movement duration does not exceed a preset duration threshold, the first adjustment module uses the ignition and transfer position and the initial orbit to determine an antenna initial adjustment position corresponding to the first movement duration, and thereby is able to use the antenna initial adjustment position to determine a position of the antenna in the initial orbit when the adjustment of antenna was begun.

4. The inflatable antenna of any of the preceding claims, wherein the first adjustment module is further configured to execute the following steps:
S1: when the first movement duration exceeds the preset duration threshold, determining at least one preset proportional allocation that is used to establish dynamic correlational relationship between the first orientation adjustment duration and the first deployment adjustment duration;
S2: updating the preset proportional allocation in a manner that the first deployment adjustment duration is gradually decreased and the first orientation adjustment duration is gradually increased, so as to determine a second orientation adjustment duration that is corresponding to the preset proportional allocation and is used to update the first orientation adjustment duration and a second deployment adjustment duration that is corresponding to the preset proportional allocation and is used to update the first deployment adjustment duration;
S3: determining a second movement duration that is used to update the first movement duration based on the one having the greater value between the updated first orientation adjustment duration and the updated first deployment adjustment duration, and comparing the updated first movement duration with the preset duration threshold again; and
S4: repeating the previous steps S1-S3 in order until the first movement duration does not exceed the preset duration threshold, and outputting the first orientation adjustment duration, the first deployment adjustment duration, and the antenna initial adjustment position that are all corresponding to the first movement duration, so as to realize an optimal solution that has both the minimal possible estimated consumption and maximal possible orbital transfer efficiency.

5. The inflatable antenna of any of the preceding claims, wherein the second adjustment module at least comprises an environment monitoring unit, which is configured to:
at the first moment when a satellite is in a satellite initial adjustment position, acquire current aerodynamic force information that is collected in a real-time manner and is related to areas involved in the satellite initial adjustment position and is used to provide a parameter set required by an atmospheric forecast, and perform forecast calculation based on locational relationship between the areas involved in the ignition and transfer position and the satellite initial adjustment position so as to generate the first aerodynamic force information of the areas involved in the ignition and transfer position; and
at the second moment when the satellite is at the ignition and transfer position, acquire the second aerodynamic force information that is collected in a real-time manner and is related to the areas involved in the ignition and transfer position, and is used to perform adjustment and correction when the satellite is at the ignition and transfer position.

6. The inflatable antenna of any of the preceding claims, wherein the second adjustment module, when receiving at least one said instruction for executing the relevant specific event, determines the estimated consumption required by the satellite thruster to execute the specific event, and the second adjustment module is configured to:
when the first adjustment module determines at least one said ignition and transfer position based on the initial orbit and the target orbit acquired by the first acquisition module, complete an orbital transfer preplanning process about the ignition and transfer position successfully transferring from the initial orbit to the target orbit by considering the initial orbit, the target orbit, and the ignition and transfer position in a manner that the orbital transfer environment monitoring information is ignored, and generate the corresponding estimated consumption required by completing the orbital transfer preplanning process.

7. The inflatable antenna of any of the preceding claims, wherein the second adjustment module serves to determine the orbital transfer request mixing ratio coefficients corresponding to the satellite thruster and the inflatable antenna, respectively, based on the first antenna adjustment control information and the estimated consumption while determining aerodynamic force auxiliary coefficient of the orbital transfer environment monitoring information at the first moment, in which:
when the aerodynamic force auxiliary coefficient is smaller than 1, it is determined that the aerodynamic force information influences execution process of the relevant specific event as a drag, and the second adjustment module determines the orbital transfer request mixing ratio coefficient corresponding to the inflatable antenna in a manner that influence of the aerodynamic force information is minimized with the aid of the inflatable antenna, and then determines the orbital transfer request mixing ratio coefficient corresponding to satellite thruster based on the orbital transfer request mixing ratio coefficient corresponding to the inflatable antenna in a manner that increase of the estimated consumption is minimized;
when the aerodynamic force auxiliary coefficient is greater than 1, it is determined that the aerodynamic force information influences the execution process of the relevant specific event as an aid, and the second adjustment module determines the orbital transfer request mixing ratio coefficient corresponding to the inflatable antenna in a manner that makes the most use of the aerodynamic force information with the aid of the inflatable antenna, and then determines the orbital transfer request mixing ratio coefficient corresponding to the satellite thruster based on the orbital transfer request mixing ratio coefficient corresponding to the inflatable antenna in a manner that the decrease of the estimated consumption is maximized; and
a sum of the orbital transfer request mixing ratio coefficients corresponding to the satellite thruster and the inflatable antenna, respectively, is equal to 1.

8. The inflatable antenna of any of the preceding claims, wherein the second adjustment module further comprises an adjustment and correction unit, which is configured to:
at the second moment, according to difference between the second aerodynamic force information and the first aerodynamic force information, acquire an error correction coefficient for the first antenna adjustment control information corresponding to the first aerodynamic force information, and thus be able to perform adjustment and correction in a relatively small adjustment range on satellite orientation information corresponding to the second moment and satellite deployment information corresponding thereto, respectively, based on the error correction coefficient, so as to allow the satellite to accurately match the actually measured second aerodynamic force information during the execution of the relevant specific event, and to update the orbital transfer request mixing ratio coefficient correspondingly based on the corrected first antenna adjustment control information, thereby further accurately controlling consumption of the satellite thruster during the execution of the relevant specific event.

9. The inflatable antenna of any of the preceding claims, wherein first-stage deployment components (11) are configured to expand outward in response to a driving effect from an inflation pressure acting as a driving force applied thereto, so as to drive at least a part of the flexible antenna folding surface to unfold, and when the first-stage deployment components (11) expand to a fully expanded position of its first-stage, second-stage deployment components (12) in response to a driving force applied thereto expand in stages based on a shape memory effect by releasing shape memory material boards (7) on the flexible antenna folding surface, thereby making the flexible antenna folding surface perform staged, controllable incomplete or complete spatial unfolding from bottom to top in a manner that an effective unfolded area is increased and deployment impact overload is decreased.

10. The inflatable antenna of any of the preceding claims, wherein the flexible antenna folding surface has at least two parts of the antenna folding surface that are different in folding/unfolding mechanism, in which,
the first antenna folding surface (5) gradually folds or unfolds along a preset route as the first-stage deployment components (11) retract/expand, and the first-stage deployment components (11) are configured to by controllably regulating an airflow that enters the interior of the first-stage deployment components (11) through at least one first opening to flow to and fro along a height direction and a longitudinal extension direction of the interior, release locking of the first-stage deployment components (11) in their retracting/expanding direction and drive them to retract/expand, thereby driving the first antenna folding surface (5) to gradually retract/expand along the preset route and automatically holding the fully retracted/expanded first-stage deployment components (11) in their current expanded position.

11. The inflatable antenna of any of the preceding claims, wherein the second antenna folding surface (6) gradually folds/unfolds along a preset route as the second-stage deployment components (12), in which,
the second-stage deployment components (12) are configured to by controllably regulating how an airflow that enters the interior of the second-stage deployment components (12) through at least one second opening flows to and fro along a height direction and a longitudinal extension direction of the interior, drive the second-stage deployment components (12) to expand in stages until they abut against the second antenna folding surface (6), so that the second-stage deployment components (12) when powered and heated exert the shape memory effect of the at least one shape memory material board (7) on the second antenna folding surface (6) in stages, thereby driving the second antenna folding surface (6) to unfold along the preset route gradually and automatically holding the fully unfolded second antenna folding surface (6) in its current unfolded position with the aid of the shape memory material board (7).

12. A deployed-volume-controlling method for an inflatable antenna, wherein at least comprises the following steps:
based on an initial orbit and a target orbit acquired determining at least one ignition and transfer position, and based on first aerodynamic force information that is acquired at a first moment and is related to areas involved in the ignition and transfer position generating orbital transfer environment monitoring information, and based on the orbital transfer environment monitoring information determining first antenna adjustment control information;
based on the initial orbit and the target orbit determining at least one instruction for executing a relevant specific event, and when receiving the at least one instruction for executing the relevant specific event, determining estimated consumption required by a satellite thruster to execute the specific event;
based on the first antenna adjustment control information and the estimated consumption determining orbital transfer request mixing ratio coefficients corresponding to the satellite thruster and the inflatable antenna, respectively as well as a first control instruction and a second control instruction corresponding thereto, so that the inflatable antenna receives the first control instruction in a manner that an aerodynamic force compensation is made to the satellite thruster that receives the second control instruction, and based on second aerodynamic force information that is acquired at a second moment and is related to areas involved in the ignition and transfer position performing at least one time of adjustment and correction, thereby executing the at least one relevant specific event.

13. The deployed-volume-controlling method of any of the preceding claims, wherein at least comprising the following steps:
with the first antenna adjustment control information determined based on the orbital transfer environment monitoring information at least comprising first orientation adjustment duration for antenna orientation adjustment and first deployment adjustment duration for antenna specific surface area adjustment, determining first movement duration based on the one having the greater value between the first orientation adjustment duration and the first deployment adjustment duration, and
when the first movement duration does not exceed a preset duration threshold, using the ignition and transfer position and the initial orbit to determine an antenna initial adjustment position corresponding to the first movement duration, and thereby being able to use the antenna initial adjustment position to determine a position of the antenna in the initial orbit when the adjustment of antenna was begun.

14. A spatially deployable, inflatable antenna, the inflatable antenna at least comprising a flexible antenna folding surface and deployment components, wherein the deployment components being composed of at least the deployment components of two stages that use an inflation pressure as a driving force to drive successively and get connection with at least the deployment components of two stages at different altitudes with respect to the flexible antenna folding surface, respectively, in which
first-stage deployment components (11) are configured to expand outward in response to a driving effect from an inflation pressure acting as a driving force applied thereto, so as to drive at least a part of the flexible antenna folding surface to unfold, and when the first-stage deployment components (11) expand to a first-stage full deployment position, second-stage deployment components (12) in response to a driving force applied thereto expand in stages based on a shape memory effect by releasing shape memory material boards (7) on the flexible antenna folding surface, thereby making the flexible antenna folding surface perform staged, controllable incomplete or complete spatial unfolding from top to bottom in a manner that an effective unfolded area is increased and deployment impact overload is decreased.

15. The inflatable antenna of claim 14, wherein the flexible antenna folding surface has at least two parts of the antenna folding surface that are different in folding/unfolding mechanism, in which,
the first antenna folding surface (5) gradually folds or unfolds along a preset route as the first-stage deployment components (11) retract/expand, and the first-stage deployment components (11) are configured to by controllably regulating how an airflow that enters the interior of the first-stage deployment components (11) through at least one first opening flows to and fro along a height direction and a longitudinal extension direction of the interior, release locking of the first-stage deployment components (11) in their retracting/expanding direction and drive them to retract/expand, thereby driving the first antenna folding surface (5) to gradually retract/expand along the preset route and automatically holding the fully retracted/expanded first-stage deployment components (11) in their current expanded position.
